(19) Europäisches Patentamt
European Patent Office
Office européen des brevets

(11) **EP 4 459 265 A1**

(12) **EUROPEAN PATENT APPLICATION**

(43) Date of publication:
**06.11.2024 Bulletin 2024/45**

(21) Application number: **23171414.8**

(22) Date of filing: **03.05.2023**

(51) International Patent Classification (IPC):
**G01N 21/63** (2006.01)    **G01N 25/20** (2006.01)
**G01F 22/00** (2006.01)    **G01N 21/17** (2006.01)
**G01N 25/72** (2006.01)    **G01N 21/66** (2006.01)

(52) Cooperative Patent Classification (CPC):
**G01F 22/00; G01N 25/20;** G01N 25/72

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **NanoLockin GmbH
1700 Fribourg (CH)**

(72) Inventors:
• **BONMARIN, Mathias
1700 Fribourg (CH)**

• **FESTEL, Gunter
1700 Fribourg (CH)**
• **GEERS, Christoph
1700 Fribourg (CH)**
• **LATTUADA, Marco
1700 Fribourg (CH)**
• **MIRABELLO, Giulia
1700 Fribourg (CH)**

(74) Representative: **Weickmann & Weickmann
PartmbB
Postfach 860 820
81635 München (DE)**

(54) **DETERMINATION OF AN UNKNOWN VOLUME OR WEIGHT OF A SAMPLE BY DYNAMIC THERMAL IMAGING**

(57) The invention relates to a determining an unknown volume or weight of a sample (36a, 36b) by using dynamic thermal imaging, wherein the method comprises the steps of: periodically stimulating, for a predefined measurement time, at least one specimen (30, 30a, 30b) by means of a stimulation source (22); and obtaining, by using dynamic thermal imaging, heat signals of the specimen (30), and wherein the specimen (30, 30a, 30b) is obtained by combining a reference (34a, 34b) and the sample (36a, 36b), wherein at least one sample specific parameter of the sample (36a, 36b) is predetermined, wherein the method further comprises the steps of: providing a plurality of specimens, wherein each specimen (30, 30a, 30b) comprises, by combining, the reference (34a, 34b) and the sample (36a, 36b), such that a volume or weight of the reference (34a, 34b) in each specimen (30, 30a, 30b) is different; obtaining heat signals for each specimen (30, 30a, 30b) of the plurality of specimens; and calculating the unknown volume or weight of the sample (36a, 36b) based on a stock concentration of the reference (34a, 34b), the volumes of the reference (34a, 34b) in the plurality of specimens and the heat signals of the plurality of specimens.

Fig. 4a

EP 4 459 265 A1

**Description**

The present invention relates to a method for determining an unknown volume or weight of a sample by using dynamic thermal imaging, also referred to as active thermal imaging or active thermography. The invention also relates to a device for carrying out the method and a computer program to run the method.

For many scientific as well as industrial applications, e.g. experimental studies and the production of chemical, biochemical, pharmaceutical and technical compounds, precise knowledge over the quality as well as the quantity of the employed materials is required. Of particular importance is the standardization and/or calibration of the implemented processes, such that reproducibility can be ensured. In this regard, the determination of the volume and/or weight or mass of materials, in particular materials in the solid or liquid state, is often crucial. Nowadays, a plethora of capable methods for the determination of volume and weight is known. Prominent examples are, among others, pycnometry and the use of volumetric pipets for the determination of volume, while scales and force sensors may be employed to measure the weight of a sample.

However, these methods frequently exhibit limitations when measuring materials in the micro or nano range, i.e. volumes below 1000 µL and weights below 1000 µg. Such materials are in general more complex than their macroscopic counterparts with respect to handling and processing. Many of the methods stated above are either not sensitive enough to resolve such low quantities or require complex sample preparation, are time-consuming and/or cumbersome with respect to their usage. Another concern is the risk of contamination of the sample, as the properties of micro- and nanomaterials are often significantly altered, if the sample is contaminated. Thus, methods that do not offer the possibility to measure samples in a controlled environment are detrimental. Further, with respect to micro- and nanomaterials, said methods commonly do not allow for the automatisation of volume and/or weight determination. Consequently, there is a need for methods capable of determining unknown volumes and weights of materials in the micro and nano range.

Methods suitable to characterize such materials are, among others, dynamic thermal imaging techniques. Said techniques, and in particular lock-in thermography (LIT), allow the measurement and analysis of temperature variations of samples or specimens and the surrounding thereof. For that reason, LIT is nowadays used to investigate stimuli-responsive materials, i.e. materials, which generate thermal energy upon stimulation by an external stimulation source, wherein the extent of generated thermal energy depends on the applied stimulation source, but also material related properties, such as size, shape and chemical composition. In the case of LIT, it is common to directly measure infrared radiation originating from the sample, i.e. temperature variations, and respectively heat signals, by means of a detector, e.g. an infrared camera, to subsequently convert the detected infrared radiation into an averaged two-dimensional heat distribution pattern. Thereby, a temperature related amplitude signal can be obtained and further evaluated to retrieve information on the sample's heating characteristics and properties.

One of the advantages of LIT is based on the periodic stimulation of the sample. The stimulation source, which is configured to provide a sample specific stimulation, is operated at a modulation frequency, thus resulting in a modulated heat generation of the sample. Due to the periodic stimulation of the sample in combination with the recording of the generated heat signals over numerous stimulation cycles, LIT significantly improves the signal-to-noise ratio with respect to standard thermography techniques, such that temperature variations below 1 mK can be resolved. Consequently, LIT is a suitable technique to investigate materials, which exhibit relatively weak heat signals, in particular nano- and microparticles.

The LIT technique itself and devices, which are capable of performing LIT measurements, are well known. For example, WO 2018/219 610 A1 discloses LIT as a method for characterizing particles producing heat when exposed to light, and accordingly a device for carrying out such a method. Homogeneous light waves of at least two different wavelengths are generated to stimulate a particle sample, wherein light waves with a first wavelength do not overlap light waves with a second wavelength with respect to their time base. By applying the disclosed method, temperature related amplitude signals can be obtained and subsequently correlated with sample specific properties, such as size, shape and/or chemical composition.

Based on the challenges with respect to the determination of volumes and weights of materials in the micro and nano range outlined above, it is an object of the present invention to provide a method for determining an unknown volume or weight of a sample by using dynamic thermal imaging, wherein the method is suitable to resolve volumes and weights in the micro and nano range and can be conducted in a time efficient manner with a high reproducibility. It is a further object of the present invention to provide a device for carrying out the method and a computer program to run the method on a computer.

According to a first aspect of the invention, the above object is achieved by a method for determining an unknown volume or weight of a sample by using dynamic thermal imaging, wherein the method comprises the steps of: periodically stimulating, for a predefined measurement time, at least one specimen by means of a stimulation source; and obtaining, by using dynamic thermal imaging, heat signals of the specimen, wherein the specimen is obtained by combining a reference and the sample, wherein at least one sample specific parameter of the sample is predetermined, and wherein the method further comprises the steps of: providing a plurality of specimens, wherein each specimen comprises, by combining, the reference and the sample, such that a volume or weight of the reference in each specimen is different, wherein the sample is kept constant in each specimen; obtaining heat signals for each specimen of the plurality of specimens; and calculating the unknown volume or weight of the sample based on a stock concentration of the reference, the volumes or weights of the reference in the plurality of specimens and the heat signals of the plurality of specimens.

It should be noted that the method according to the first aspect of the invention is applicable to dynamic thermal imaging techniques in general and will be described herein in detail with respect to LIT. Over the course of one LIT measurement, the specimen is periodically stimulated for a predefined measurement time, wherein the measurement time may be set from a couple of seconds to several minutes. Due to the stimulation, the specimen generates a thermal response, which is continuously detected by a detector. The detector, e.g. a microbolometer, operates at a predefined frame rate and records a series of two-dimensional images of the sample and its surrounding, which are displayed as at least one modulated heat distribution pattern.

Preferably, the step of periodically stimulating at least one specimen comprises operating the stimulation source at a predefined modulation frequency, wherein the modulation frequency is preferably lower than a frame rate of the detector. In this context, the term "periodically stimulating" is not to be considered limiting with respect to the periodicity of the applied stimulation. In fact, the modulation frequency may be adapted for each specimen and the stimulation source as well as the modulation frequency may be individually associated to the sample and the reference, respectively, i.e. a first modulation frequency may be applied with respect to the sample and a second modulation frequency may be applied with respect to the reference.

The modulation frequency and the predefined measurement time may further define a total amount of stimulation cycles, which the specimen undergoes over the course of one LIT measurement, wherein the modulation frequency may be in the range of 0.25 Hz to 20 Hz. Simultaneously, the detector operates at a predefined frame rate, which may correspond to a sampling rate, wherein the frame rate of the detector may be in the range of 20 Hz to 800 Hz. The modulation frequency and the frame rate of the detector are preferably synchronized. By operating the detector at a significantly higher frame rate with respect to the modulation frequency of the stimulation source, the detection sensitivity of the LIT measurement can be increased (Source: Lock-in Thermography, 3rd Edition, 2018, Springer International Publishing).

The heat signals of the specimen are processed by demodulating the obtained modulated heat distribution pattern, which is performed according to the standard lock-in correlation method. In particular, the demodulation may be performed according to a digital lock-in correlation, wherein the recorded series of images is preferably evaluated "online", meaning that data is evaluated already during the measurement, which allows processing of the heat distribution patterns in a timely manner (Source: Lock-in Thermography, 3rd Edition, 2018, Springer International Publishing). Alternatively, "offline" correlation may be performed, such that the recorded series of images is stored and correlated after the measurement has finished.

The reference consists of a known material composition with predetermined reference specific parameters, such that in particular the volume, weight, density, stock concentration and stimuli-responsive properties of the reference are known. Further, the stimulation source is configured according to the stimuli-responsive properties of the reference to ensure the generation of heat signals upon stimulation of the reference. Alternatively, the reference is chosen according to the stimulation source, if a preferred stimulation source is to be used. E.g., if the stimulation source generates light of a specific wavelength, a reference may be used, which is known to absorb light at said wavelength and generate heat based on the applied stimulation. The reference may be a solid, e.g. a thin film, particulate matter, or a composite material, among others, or a liquid, e.g. a dispersion, a suspension or the like.

According to the invention, the volume or weight of the sample is determined. Said sample may be in the liquid or solid state, such as the reference, and its volume or weight is preferably in the same order of magnitude as the reference. Preferably, the material composition of the sample is known, wherein at least one sample specific parameter is predetermined. In particular, the predetermined sample specific parameter may be the concentration of the sample. Among others, the sample may comprise plasmonic materials, magnetic materials, or carbon-based materials.

The plurality of specimens preferably comprises at least three specimens, such that at least three different specimens are provided. More preferably, the plurality of specimens comprises at least four specimens, and even more preferably, at least five specimens. Each specimen of the plurality of specimens is obtained in the same manner, i.e. by combining the reference and the sample. However, the volume or weight of the reference is adapted for each specimen, such that e.g. a first specimen comprises a first reference volume, a second specimen comprises a second reference volume and a third specimen comprises a third reference volume, wherein the reference volumes of the specimens differ from each other. In particular, the plurality of specimens may be obtained by combining the reference and the sample such that: a first specimen comprises the unknown volume or weight of the sample and a first reference volume; a second specimen comprises the total volume of the first specimen and a second reference volume; a third specimen comprises the total volume of the second specimen and a third reference volume, and so on. In contrast to the reference, the unknown volume or weight of the sample is kept constant for every specimen, such that the specimens only differ from each other with respect to the volume or weight of the reference.

According to the procedure outlined above, the volumes of all the provided specimens differ from each other, which accordingly impacts the generation of heat signals of the specimens. More specifically, each specimen generates distinctive heat signals upon stimulation, which are recorded and associated with the respective specimen. The obtained heat signals of the plurality of specimens can therefore by evaluated and ranked according to their magnitude of heating.

After the heat signals of the specimens are obtained, the unknown volume or weight of the sample is calculated based on a stock concentration of the reference, the individual volumes of the reference in each of the specimen and the heat signals of the plurality of specimens. In this context, the reference is to be considered as part of the specimen, but is not necessarily mixed or merged with the sample. The stock concentration of the reference is constant for all of the specimens, i.e. the stock concentration is the concentration of the reference before the combining of the reference with the sample. As such, the stock concentration of the reference is one of the predetermined reference specific parameters.

As the respective reference volume in each specimen directly correlates with the obtained heat signals of the specimens, a relationship between the reference volume and the generated heat signals can be derived. More specifically, with the unknown volume or weight of the sample being constant in all of the specimens, if e.g. the reference volume in a second specimen is double of the reference volume in a first specimen, a ratio of heat signal increase between the first and second specimen directly relates to a dilution factor of the reference in the first specimen and in the second specimen. As a result, based on the known stock concentration of the reference and the respective volume of the reference in each of the specimens, the reference concentration in each of the specimens is known. Thus, the relationship between the known reference related parameters and the known specimen related parameters, optionally in combination with the at least one predetermined sample specific parameter, allows to derive the total volume of each of the specimens and finally the unknown volume of the sample or, e.g. based on the density of the sample, the unknown weight of the sample.

The method according to the first aspect of the invention is not limited to any specific ranges of sample volume or weight, i.e. samples and specimen in the macro range and in particular in the micro and nano range can be analyzed with a high sensitivity and reproducibility. Further, dynamic thermal imaging measurements and in particular LIT measurements deliver results within a couple of minutes and do not require complex preparation and/or handling of the employed materials. As only the heat generation of the specimen is measured, the shape and physical state of the specimen, sample and reference do not detrimentally impact the measurement. The specimen may be measured in a specifically designed sample holder, which preferably does not generate heat upon stimulation with the stimulation source and which is configured to confine the specimen, such that undesired manipulation or contamination of the specimen throughout the measurement is excluded.

In a preferred embodiment of the present invention, a regression curve may be provided based on the heat signals of the plurality of specimens and the volumes of the reference in the plurality of specimens, prior to the calculation of the unknown volume or weight of the sample. The regression curve, also referred to as calibration curve, is established on the basis of the measured heat signals of each specimen of the plurality of specimens and the reference concentration in a corresponding specimen. The regression curve can be used to extrapolate theoretical heat signals and in particular concentrations of the specimens. Further, outliers can be detected and potentially re-measured and/or excluded from the analysis. Optionally, the regression curve is provided based on a linear regression or a polynomial regression. The type of regression curve my in particular be chosen depending on the accuracy of the fitted regression curve, which is based on the fitting of the curve. The inventors of the present application have experimentally found that a polynomial regression is commonly preferred over a linear regression, as a polynomial regression results in more accurate results.

Moreover, based on the regression curve, an intercept and a slope or at least one regression coefficient of the regression curve can be obtained. Said intercept, slope and/or regression coefficient may be used to calculate a theoretical concentration $c_{theoretical}$ of the reference in a respective specimen, according to:

$$y = a + b \times c_{theoretical},$$

resolved for $c_{theoretical}$, wherein $y$ refers to the obtained heat signals of a given specimen, which are commonly represented as amplitude signals, $a$ refers to the intercept and $b$ refers to the slope of the regression curve. With respect to a polynomial regression, $c_{theoretical}$ may be calculated according to:

$$y = a + b1 \times c_{theoretical} + b2 \times c_{theoretical}^2,$$

wherein the equation can be resolved for $c_{theoretical}$ using the quadratic formula. Further, $b1$ is a first regression coefficient and $b2$ is a second regression coefficient. Using said regression curves is advantageous, as they allow for a time-efficient processing of the LIT measurement data and facilitate the calculation of the unknown volume or weight of the sample.

More specifically, a processing unit may automatically retrieve the processed amplitude signals, which were obtained by LIT measurements, and subsequently run a script to perform the fitting of the regression curves. Thus, with the exception of performing the LIT measurements, the method according to the present invention can be fully automated, thereby improving the time-efficiency of the method and reducing the risk of potential measurement errors and/or calculation uncertainties.

In both cases, i.e. using the linear regression or the polynomial regression, the unknown volume $V_{unknown}$ of the sample may further be calculated based on the stock concentration $c_{stock}$ of the reference, the theoretical concentration $c_{theoretical}$ of the reference and an associated volume $V_{reference}$ of the reference, according to:

$$c_{theoretical} = \frac{c_{stock} \times V_{reference}}{V_{unknown} + V_{reference}},$$

wherein $V_{unknown} + V_{reference} = V_{total}$ of a respective specimen. Resolving said equation for $V_{unknown}$ leads to:

$$V_{unknown} = \frac{c_{stock} \times V_{reference}}{c_{theoretical}} - V_{reference}.$$

The associated volume $V_{reference}$ of the reference refers to the specific volume of the reference in a respective specimen of the plurality of specimens. Moreover, if the density of the sample $\rho_{sample}$ is known, the weight of the sample $m_{unknown}$ can be calculated according to:

$$m_{unknown} = V_{unknown} \times \rho_{sample}.$$

Again, the calculation of the unknown volume $V_{unknown}$ may be fully automated, e.g. implemented in accordance with the fitting of the regression curves, as outlined above.

In a preferred embodiment of the present invention, the stimulation source may be configured to generate light or another electromagnetic field, a magnetic field, an electrical field, a mechanical force, sound waves, and/or airflow to stimulate the specimen. The stimulation source may further be configured to provide a specific chemical environment, in particular to trigger a chemical reaction of the sample, reference and/or the surrounding thereof. The stimulation source is preferably chosen to be complementary to the stimuli-responsive sample and/or reference, such that thermal energy can be generated by the specimen upon stimulation. For example, a magnetic field may be used to stimulate a magnetic sample and/or reference.

Optionally, the stimulation source is configured such that only the reference contributes to the generation of heat signals when the specimen is periodically stimulated by means of the stimulation source. As such, the sample does not contribute to the generation of heat signals, wherein this can be achieved by adapting the stimulation source such that the reference is being stimulated and consequently generates heat, whereas the sample is not. In the case of light-induced stimulation, a specific wavelength may be used, which is absorbed by the reference but transmitted by the sample. Consequently, variations in heat generation in the context of a measurement series are exclusively associated to the reference and can be utilized to characterize the specimen, and subsequently to determine the volume of weight of the sample as outlined above.

Alternatively, the stimulation source may be configured such that both, the reference and the sample, respectively contribute to the generation of heat signals when the specimen is periodically stimulated by means of the stimulation source. In this context, the sample's stimuli-responsive properties are preferably known, such that the heat signals of the reference may be distinguished from the heat signals of the sample. More specifically, a plurality of LIT measurements for several specimens may be carried out to evaluate alterations in heat signals caused by changes in reference volume. Thus, heat signals originating from the reference are distinguishable from heat signals originating from the sample, such that the unknown volume or weight of the sample can be determined as described above. Optionally, in particular if the differentiation between the reference's heat signals and the sample's heat signals is cumbersome, the stimulation source may be adapted, e.g. by changing the modulation frequency and/or the type of stimulation, in order to promote the heating of the reference and/or reduce the heating of the sample.

In a further preferred embodiment of the present invention, both the reference and the sample may be present in a liquid state, and wherein combining the reference and the sample is performed by mixing the reference and the sample. In such a case, the volume of the reference and the unknown volume of the sample are preferably in the same order of magnitude. As mixing the liquid reference with the liquid sample results in a liquid specimen, the specimen can be easily measured by LIT, e.g. using inert sample holders, such as petri dishes, pipettes or syringes, which comprise compartments to store at least one specimen. In particular, it is possible to adapt the sample holder according to the employed stimulation source, such that a variety of different sample holders can be used. It should be noted that, if the reference and the sample are immiscible liquids, the term "mixing" the reference and the sample to provide the specimen refers to adjacently storing both in the same compartment.

Alternatively, either the reference or the sample may be in a liquid state, the other one being in a solid state, and wherein combining the reference and the sample is performed by arranging the reference adjacent to the sample, such that one of the reference or the sample is closer to the stimulation source. In case at least one of the reference and the sample is in the solid state, the specimen does not form a single entity, but is nonetheless considered to comprise both the sample and the reference. Optionally, the reference and the sample may be physically separated by separation means, e.g. a glass slide, which is transparent to infrared radiation. Further, said specimen may be arranged such that the reference and the sample at least partially overlap each other with respect to the stimulation source. More specifically, the specimen may be arranged along a direction between the stimulation source and the detector, such that either the reference or the sample is closer to the stimulation source, wherein the other one is closer to the detector. Thereby, the specimen is substantially equally stimulated by the stimulation source and both the reference and the sample may contribute to the generation of heat signals.

In a preferred embodiment of the present invention, the predetermined sample specific parameter of the sample may be a concentration, a surface area or a profile of the sample. Preferably, if both the reference and the sample are in the liquid state, such that the specimen is provided by mixing both liquids, the predetermined sample specific parameter may be the concentration of the sample, as outlined above. However, if at least one of the reference or the sample are in a solid state, the corresponding specimen is not considered a uniform entity having uniform specimen specific parameters. E.g. the reference may be a solid thin film comprising plasmonic materials, which generate heat upon stimulation with light of a specific wavelength, wherein the sample is a liquid. In such a case, the sample can be drop-casted on the thin film and the surface area or profile of the sample is subsequently determined, e.g. by recording an image of the sample and retrieving said parameter by using image processing software. In this context, the surface area of the sample may refer to an area of the sample, which covers the reference when viewed along the direction between the stimulation source and the detector. Similarly, the profile of the sample may refer the outline or shape of the sample, which overlaps with the reference, when viewed in said direction. Further, while the surface area or profile of the liquid sample are kept constant, the reference may be varied in order to provide the plurality of specimens according to the first aspect of the present invention. Subsequently, the unknown volume or weight of the sample may be determined as outlined above, i.e. by obtaining heat signals for each of the specimens and hence calculating the unknown volume or weight of the sample.

Optionally, a plurality of specimens may be simultaneously stimulated while performing the method of the present invention. As LIT allows for the detection of infrared radiation in a spatially resolved manner, a plurality of specimens may be analyzed in a single measurement, thus improving the time-efficiency of the method. In particular, a plurality of specimens may be arranged with respect to the stimulation source, such that all of the specimens are equally stimulated. Accordingly, the detector may spatially resolve said plurality of specimens, thereby allowing for the recording of heat signals of all specimens in a single measurement.

In a preferred embodiment of the present invention, the sample and/or the reference may comprise nanoparticles and/or microparticles. In this context, nanoparticles may be understood as materials with a diameter of 1 to 100 nm in at least one dimension, wherein they may comprise a variety of shapes, such as spheres, prisms, rods, sheets, stars and/or tubes. Accordingly, microparticles may be understood as materials with a diameter of 100 nm to 1000 $\mu$m in at least one dimension, wherein they may be of arbitrary shape. Such materials, in particular nanoparticles, are known to generate only weak temperature responses upon stimulation by a stimulation source. Therefore, LIT is preferably applied for analyzing the heat generation capabilities of these materials, due to its high sensitivity and enhanced signal-to-noise ratio. However, the sample and/or the reference may also comprise materials exceeding the size range of nano- and microparticles, i.e. macroscopic materials.

In a further preferred embodiment of the present invention, the sample and/or the reference may be embedded in a solid or liquid matrix. In particular, biological studies are commonly carried out by embedding the sample in a biological matrix, such as cells or tissue, to investigate the interaction of the sample with its surrounding. The sample and/or the reference may also be exposed to specific chemical environments to trigger chemical reactions and/or to promote dissolution of the sample and/or the reference. As a result, embedding the sample and/or the reference in a matrix may influence their thermal response, wherein alterations of the heat generation upon stimulation may be recorded over time. As such alterations may only be marginal, they are potentially within the average background noise.

Optionally, the measurement time is defined according to sample and/or reference specific parameters. In particular, if a sensitive material is to be investigated, the measurement time may be kept short in order to prevent or minimize damaging the sample and/or the reference due to the stimulation. In the case of excessive stimulation, the sample and/or the reference might not only be irreversibly damaged, but also measurement results could be detrimentally affected. Further, the modulation frequency may also be adjusted according to sample and/or reference specific parameters, wherein the duration of a single stimulation cycle can be tuned depending on the applied modulation frequency.

Therefore, the total amount of stimulation cycles of a single LIT measurement can be adjusted by adapting the measurement time and the modulation frequency.

According to a second aspect of the invention, the object is achieved by a device for carrying out a method for determining an unknown volume or weight of a sample by using dynamic thermal imaging, comprising: a stimulation source for periodically stimulating at least one specimen for a predefined measurement time; and a dynamic thermal imaging unit configured to record heat signals of the specimen, wherein the specimen comprises a reference and the sample, and wherein at least one sample specific parameter of the sample is predetermined, wherein the device further comprises a processing unit configured to: process heat signals for each specimen of a plurality of specimens, wherein the volume of the reference in each specimen is different and the sample is kept constant in each specimen; and calculate the unknown volume of the sample based on a stock concentration of the reference, the volumes or weights of the reference in the plurality of specimens and the heat signals of the plurality of specimens.

It should be noted, that corresponding features, advantages and embodiments related to the method according to the first aspect of the present invention may also apply to the device according to the second aspect of the present invention, such that the device is suitable to carry out the method.

The dynamic thermal imaging unit comprises a detector and optionally further means, which may be associated to an experimental LIT setup, such as cooling means for the detector and a sample holder stage, which may allow for the precise positioning of the specimen, reference and/or sample with respect to the stimulation source and the detector. Moreover, the dynamic thermal imaging unit is configured to record heat signals of the specimen as described with respect to the method of the first aspect of the present invention. In particular, the dynamic thermal imaging unit may comprise recording means for recording a series of images of the specimen and to obtain at least one modulated heat distribution pattern. The processing unit of the device is configured to process the recorded heat signals of the specimen, reference and/or sample, i.e. by demodulating the obtained modulated heat distribution patterns, wherein the demodulation may be performed according to the standard lock-in correlation method. For that reason, the processing unit may comprise demodulation means for demodulating the heat distribution pattern by applying a mathematical transformation, such that a specimen specific temperature signal is derivable from the demodulated heat distribution pattern. Further, the processing unit may be configured to store the demodulated heat distribution pattern as well as the recorded heat signals.

Moreover, the device may comprise a single unit including all of the individual components, i.e. the stimulation source, the dynamic thermal imaging unit and the processing unit, in the sense of a single unit table-top device. In such a case, the processing unit may be a processor of a computer, preferably a microcomputer, located within the single unit of the device. Alternatively, the device may comprise a plurality of interconnected units, wherein each of the interconnected units may comprise one or more of the individual components of the device. Such a case might be preferred, if the stimulation source and/or the detector are relatively bulky, thus requiring extra space for accessing and operating them.

In a preferred embodiment of the present invention, the device may further comprise a sample holder, preferably comprising a plurality of compartments, wherein each compartment is configured to receive a specimen. The sample holder may be an integral part of the device or may be an individual unit, i.e. being exchangeable and/or adjustable with respect to the specimen, reference and/or sample to be measured. As such, the sample holder can be specifically designed and/or adapted for storing the specimen and to be suitable for the determination of the unknown volume or weight of the sample. Thus, a broad variety of samples can be measured by LIT, which improves the applicability of the device according to the second aspect of the present invention as well as the method according to the first aspect of the present invention. Further, by using a sample holder having a plurality of compartments, the plurality of specimens may be analyzed in a single measurement.

Optionally, the processing unit is further configured to simultaneously process heat signals of each specimen of the plurality of specimens. In particular, if a plurality of heat signals are simultaneously stimulated by the stimulation source and recorded by the dynamic thermal imaging unit, the processing unit may be configured to automatically detect each of the recorded heat signals, e.g. by using image processing software, and calculate the unknown volume or weight of the sample as described with respect to the method of the first aspect of the present invention. By doing so, the device allows for the rapid analysis of the plurality of specimens, thus increasing the amount of specimen that can be processed in a given amount of time.

According to a third aspect of the invention, the object is achieved by a computer program, which is configured to run the method according to the first aspect of the present invention, when run on a computer. The computer program is preferably run on or by the processing unit according to the device of the second aspect of the present invention. Moreover, the computer program may be at least partially operated by a user. When operating the computer program, the user may set measurement specific parameters, such as the measurement time and/or the modulation frequency. Alternatively, the computer program may be configured to automatically run all or the majority of the steps of the method according to the first aspect of the present invention. Further, the computer program may comprise features of common image processing software to enable displaying and facilitate processing of the record heat signals.

Additional features and advantages of the present invention will become even clearer from the following description of embodiments thereof, when taken together with the accompanying figures, which show in particular:

Fig. 1 an embodiment of a device for performing LIT measurements;

Fig. 2a a schematic illustration of a liquid reference and a liquid sample on a sample holder, according to a first embodiment;

Fig. 2b a schematic illustration of a specimen on a sample holder, according to the first embodiment;

Fig. 3 a graph depicting LIT measurement results of a plurality of specimen and a polynomial regression curve plotted in dependence thereof;

Fig. 4a a schematic illustration of a solid reference and a liquid sample on a sample holder, according to a second embodiment; and

Fig. 4b a cross-sectional view of the second embodiment shown in Fig. 4a.

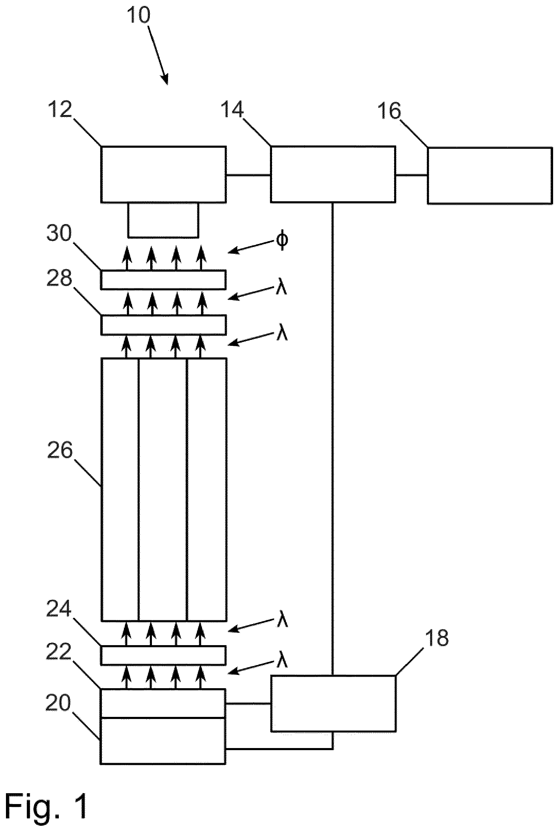

An embodiment of the invention in the form of a device 10 for performing LIT measurements for determining an unknown volume or weight of a sample is shown in Figure 1. The device 10, which may be a device according to the second aspect of the present invention, comprises a dynamic thermal imaging unit with a detector 12 configured to detect heat $\phi$, i.e. infrared radiation, and record images, wherein each of the images corresponds to a modulated two-dimensional heat distribution pattern. Thereby, the amplitude of temperature oscillations, which occur during each of the stimulation cycles, can be determined. In this embodiment, the detector 12, which is part of a dynamic thermal imaging unit (not specified in Figure 1), may be a microbolometer recording infrared images at a predefined frame rate, e.g. 80 Hz. The detector 12 is connected to a processing unit 14, which may be part of a computer or a microcomputer. The processing unit 14 is configured to store the modulated heat distribution pattern of each LIT measurement and to demodulate the heat distribution patterns by applying a Fourier Transform, preferably according to the standard lock-in correlation method. The processing unit 14 further comprises or is connected to a user interface 16, which may be a touchscreen. A user can predefine measurement specific parameters, such as a measurement time and a modulation frequency, via the user interface 16. The processing unit 14 is also configured to perform image processing operations and calculations.

The device 10 may further be equipped with a stimulation source driver unit 18, wherein the driver unit 18 is connected to the processing unit 14, optionally to cooling means 20, and to a stimulation source 22. The driver unit 18 may be used to operate and to modulate the stimulation source 22, e.g. at a modulation frequency of 1 Hz, via commands sent by the processing unit 14. Cooling means 20 are preferably employed if the stimulation source 22 generates a significant amount of thermal energy during its operation, such that overheating of the stimulation source 22 is prevented. Here, the cooling means 20 may be provided in the form of an active cooling system, such as a water cooling system, or a passive cooling system, e.g. based on convection.

In this embodiment of the device 10, a light source is used as the stimulation source 22, wherein the stimulation source 22 may comprise light-emitting diodes to generate light of specific wavelengths $\lambda$. However, the stimulation source may also be configured to generate an electric field or a magnetic field, among others. Here, light $\lambda$ is periodically emitted to stimulate a specimen 30. The specimen 30 comprises, by combing, a reference and a sample, as described with respect to the method of the first aspect of the present invention. In Figure 1, the specimen 30 is only schematically depicted. A first optical filter 24 may be associated to the stimulation source 22, which is configured to allow certain wavelengths of light $\lambda$ to pass and/or to tune the intensity of the emitted light $\lambda$. In case a different type of stimulation source 22 is employed, the first optical filter 24 may be absent or adapted accordingly. A homogenizing rod 26 is aligned with the stimulation source 22 and the first optical filter 24, such as to homogenize the light $\lambda$. The homogenization of light $\lambda$ is preferably achieved by total internal reflection and ensures even illumination of the specimen 30. Moreover, a second optical filter 28 may be arranged between the homogenizing rod 26 and the specimen 30 for filtering of the homogenized light $\lambda$.

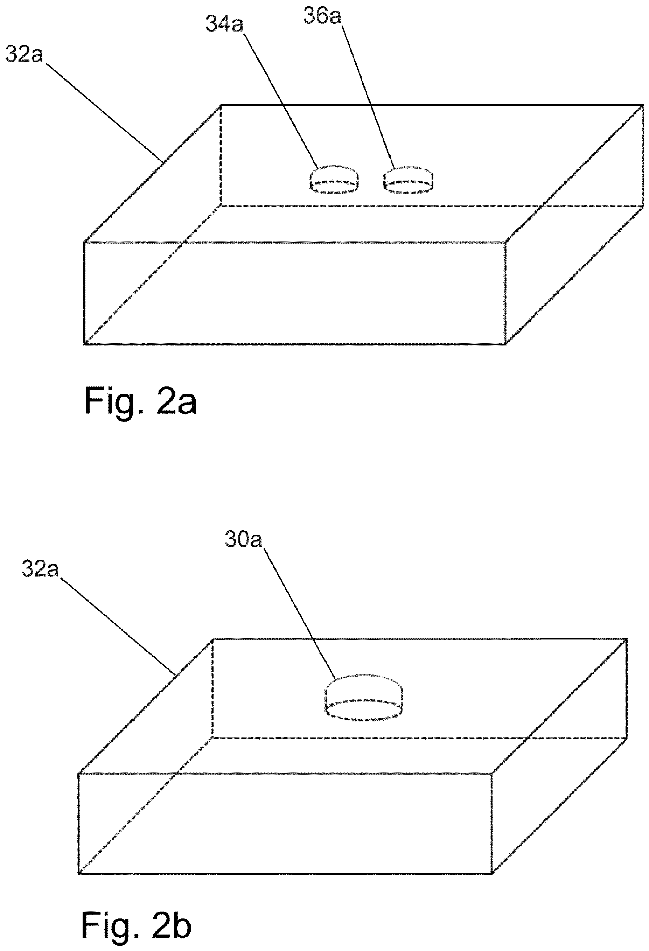

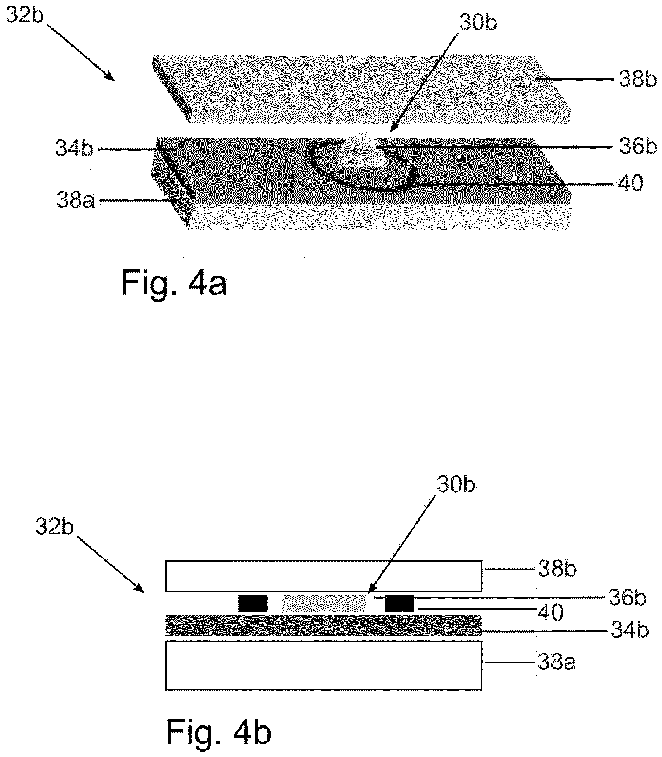

The specimen 30 is placed on or held by a sample holder, which is not shown in Figure 1, but described with respect to Figures 2a, 2b, 4a & 4b. The specimen 30 is arranged on the sample holder such that it can be exposed to the generated light $\lambda$ of the stimulation source 22. Upon interaction with light $\lambda$ the specimen 30 generates a specific amount of thermal energy $\phi$, wherein the amount of generated thermal energy $\phi$ depends on the stimulation itself as well as specimen specific parameters, which are governed by the comprised reference and sample. The detector 12 is preferably aligned with and focused on the specimen 30 and/or the sample holder, to optimize the detection of the generated infrared radiation.

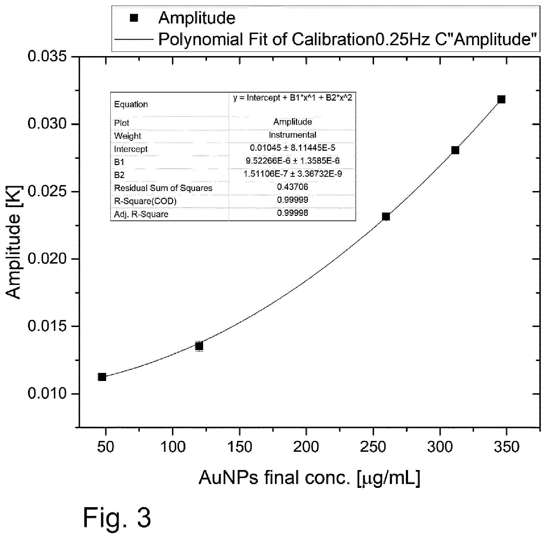

In the following, a non-limiting example for performing the method according to the first aspect of the present invention is explained in detail, wherein the device 10 may be used to carry out the method. During an initial step, as shown in Figures 2a & 2b and Figures 3a & 3b, respectively, a specimen 30a, 30b is provided by combining a reference 34a, 34b with a sample 36a, 36b of unknown volume or weight. In Figures 2a & 2b, the specimen 30a is prepared by mixing two liquids, i.e. reference 34a and sample 36a, which may be individually drop-cast on a sample holder 32a according to a first embodiment. In this example, the sample holder 32a may be a glass slide, however, the sample holder may also be provided in the form of a petri dish, a pipette, a syringe, or the like. In particular, any compartment may be used, which is suitable for storing the specimen and exposing the specimen to the stimulation source. Referring again to the present example, the stimulation source generates light of a specific wavelength, e.g. 525 nm. Thus, the glass slide 32a is preferably configured to be transparent to said wavelength in order to not interfere with the measurement.

The reference 34a und the sample 36a, which are substantially in the same order of magnitude with respect to their volumes, are combined by mixing to obtain one specimen 30a, which is shown in Fig. 2b in the form of a single droplet. In the present example, the reference 34a comprises a dispersion of spherical gold nanoparticles (AuNPs) with an average diameter of 15 nm and a stock concentration of 519 μg/ml. Such AuNPs are known to generate heat upon stimulation with light at a wavelength of 525 nm, thus rendering them suitable for dynamic thermal imaging measurements and in particular LIT measurements (Source: Particle & Particle Systems Characterization, 2019, Vol. 36, Issue 9, 1900224). The sample 36a of unknown volume is water, such that in particular the sample specific concentration and density of the sample 36a are known. After mixing of the reference 34a und the sample 36a, the obtained specimen 30a is periodically stimulated by the stimulation source 22, e.g. at a modulation frequency of 0.25 Hz and for a duration of 180s, resulting in the generation of heat signals of the specimen 30a. Said heat signals are recorded by the detector 12 and processed by the processing unit 14, as described above with respect to Fig. 1. These steps are then repeated for a plurality of specimens, wherein each specimen 30a of the plurality of specimens comprises a different reference volume in order to establish a measurement series, which is used to calculate the unknown volume of the sample 36a. The following table highlights some of the known parameters of the reference, the sample and the specimens as well as the processed heat signals, which are referred to as amplitude (K).

| reference volume (μL) | specimen volume (μL) | final reference concentration [AuNPs concentration (μg/ml)] | amplitude (K) |
|---|---|---|---|
| 1 | 1 +X | 47.2 | 0.0112 |
| 3 | 3 + X | 119.8 | 0.0135 |
| 5 | 5 + X | 173.0 | 0.0162 |
| 10 | 10 + X | 259.5 | 0.0231 |
| 15 | 15 + X | 311.4 | 0.0281 |
| 20 | 20 + X | 346.0 | 0.0318 |

In the table, X refers to the unknown volume of the liquid sample 36a, i.e. the unknown volume of water. The final reference concentration refers to the concentration of AuNPs in each specimen 30a, which can be determined based on the known stock concentration of the liquid reference 34a (519 μg/ml), the known volume of the reference 34a in each specimen 30a and the known concentration of the sample 36a (1 μg/ml).

On the basis of the measured LIT amplitude signals and the concentrations of the AuNPs in each of the specimens, a graph can be plotted, as shown in Figure 3. Further, a polynomial regression curve is obtained by fitting, wherein an intercept and two regression coefficients $b1$ & $b2$ are retrieved off the regression curve, as depicted in Figure 3. Accordingly, for any point along the polynomial regression curve, a theoretical concentration $c_{theoretical}$ of the AuNPs, i.e. the reference, in a respective specimen can be calculated upon solving the equation

$$y = a + b1 \times c_{theoretical} + b2 \times c_{theoretical}^2,$$

for $c_{theoretical}$, with $a$ being the intercept and $y$ being the measured amplitude (K). In this example, for a reference volume of 5 ml, with the intercept being 0.01045, $b1$ being 9.52E-6, $b2$ being 1.51E-7 and the associated amplitude (K) being 0.0162, $c_{theoretical}$ results in 165.5 μg/ml.

Using the calculated value of $c_{theoretical}$, the unknown volume of the sample can be subsequently calculated according to:

$$V_{unknown} = \frac{c_{stock} \times V_{reference}}{c_{theoretical}} - V_{reference}.$$

In the present example, with $c_{stock}$ being 519 μg/ml and $V_{reference}$ being 5 ml, the unknown volume $V_{unknown}$ of the sample results in 10.7 ml. It should be noted that $V_{unknown}$ can be calculated for any specimen of the measurement series, given that the amplitude (K) and the AuNPs concentration of the respective specimen is known.

According to a second embodiment, i.e. for a specimen 30b, which is obtained by combining a solid reference 34b with a liquid sample 36b, an alternative sample holder 32b may be used. The sample holder 32b, which is shown in Figures 4a & 4b, comprises two glass slides 38a, 38b. Said glass slides 38a, 38b are arranged such that a lower glass slide 38a supports the solid reference 34b and an upper glass slide 38b confines the liquid sample 36b on the reference 34b. In particular, the reference 34b may be a thin film coated with AuNPs, which generate heat signals upon stimulation with the stimulation source, according to the reference 34a of the first embodiment. As can be seen in Figures 4a & 4b, the sample 36b of unknown volume is provided in the form of a droplet on a surface of the solid reference 34b. Thus, the specimen 30b is not obtained by mixing the reference 34b and the sample 36b, but simply refers to the combination of reference 34b and sample 36b with respect to the resulting heat signals. The upper glass slide 38b in combination with a spacer 40 confine the spatial expansion of the sample 36b such that a surface area or profile of the sample 36b can be defined, when viewed along a direction perpendicular to the main extension direction of the sample holder 32b, i.e. a direction extending from the stimulation source to the detector (not shown in Figures 4a & 4b).

Upon stimulation with the stimulation source, the presence of the sample 36b will result in an altered heat signal of the specimen 30b, wherein said altered heat signal is limited to the surface area of the reference 34b, which is covered by the sample 36b. As the alteration in heat generation of the specimen 30b is directly linked to the presence of the sample 36b, the difference between the individual heat signals of the reference 34b and the specimen 30b can be associated to the unknown volume of the sample 36b. More specifically, the greater the difference in heat signals between the reference 34b and the specimen 30b, the higher the volume of the sample 36b.

Further, a plurality of specimens may be provided e.g. by adding one or more layers of reference material, i.e. increasing the thickness of the thin film 34b, such that a measurement series can be established based on the heat signals of the reference and the heat signals of each specimen 30b of the plurality of specimens.

Accordingly, in analogy to the graph shown in Figure 3, a regression curve can be obtained and the unknown volume of the sample 36b can be calculated.

**Claims**

1.  Method for determining an unknown volume or weight of a sample (36a, 36b) by using dynamic thermal imaging, wherein the method comprises the steps of:

    a) periodically stimulating, for a predefined measurement time, at least one specimen (30, 30a, 30b) by means of a stimulation source (22); and
    b) obtaining, by using dynamic thermal imaging, heat signals of the specimen (30),

    wherein the specimen (30, 30a, 30b) is obtained by combining a reference (34a, 34b) and the sample (36a, 36b), wherein at least one sample specific parameter of the sample (36a, 36b) is predetermined, wherein the method further comprises the steps of:

    c) providing a plurality of specimens, wherein each specimen (30, 30a, 30b) comprises, by combining, the reference (34a, 34b) and the sample (36a, 36b), such that a volume or weight of the reference (34a, 34b) in each specimen (30, 30a, 30b) is different, wherein the sample is kept constant in each specimen;
    d) obtaining heat signals for each specimen (30, 30a, 30b) of the plurality of specimens; and
    e) calculating the unknown volume or weight of the sample (36a, 36b) based on a stock concentration of the reference (34a, 34b), the volumes or weights of the reference (34a, 34b) in the plurality of specimens and the heat signals of the plurality of specimens.

2.  Method according to claim 1, wherein, prior to step e), a regression curve is provided based on the heat signals of the plurality of specimens and the volumes of the reference (34a, 34b) in the plurality of specimens.

3.  Method accord to claim 2, wherein the regression curve is provided based on a linear regression or a polynomial regression.

4. Method according to claim 2 or 3, wherein, based on an intercept and a slope or at least one regression coefficient of the regression curve, a theoretical concentration $c_{theoretical}$ of the reference (34a, 34b) for at least one specimen (30, 30a, 30b) of the plurality of specimens is calculated.

5. Method according to claim 4, wherein, in step e), the unknown volume $V_{unknown}$ of the sample (36a, 36b) is calculated based on the stock concentration $c_{stock}$ of the reference (34a, 34b), the theoretical concentration $c_{theoretical}$ of the reference (34a, 34b) and an associated volume $V_{reference}$ of the reference (34a, 34b), according to

$$V_{unknown} = \frac{c_{stock} \times V_{reference}}{c_{theoretical}} - V_{reference}.$$

6. Method according to at least one of the preceding claims, wherein the stimulation source (22) is configured to generate light or another electromagnetic field, a magnetic field, an electrical field, a mechanical force, sound waves, and/or airflow to stimulate the specimen (30, 30a, 30b).

7. Method according to at least one of the preceding claims, wherein the stimulation source (22) is configured such that during step a) only the reference (34a, 34b) contributes to the generation of heat signals when the specimen (30, 30a, 30b) is periodically stimulated by means of the stimulation source (22).

8. Method according to at least one of claims 1 to 6, wherein the stimulation source (22) is configured such that during step a) both, the reference (34a, 34b) and the sample (36a, 36b), respectively contribute to the generation of heat signals when the specimen (30, 30a, 30b) is periodically stimulated by means of the stimulation source (22).

9. Method according to at least one of the preceding claims, wherein both, the reference (34a, 34b) and the sample (36a, 36b) are in a liquid state, and wherein combining the reference (34a, 34b) and the sample (36a, 36b) is performed by mixing the reference (34a, 34b) and the sample (36a, 36b).

10. Method according to at least one of claims 1 to 8, wherein either the reference (34a, 34b) or the sample (36a, 36b) is in a liquid state, the other one being in a solid state, and wherein combining the reference (34a, 34b) and the sample (36a, 36b) is performed by arranging the reference (34a, 34b) adjacent to the sample (36a, 36b), such that one of the reference (34a, 34b) or the sample (36a, 36b) is closer to the stimulation source (22).

11. Method according to at least one of the preceding claims, wherein the predetermined sample specific parameter of the sample (36a, 36b) is a concentration, a surface area or a profile of the sample (36a, 36b).

12. Method according to at least one of the preceding claims, wherein a plurality of specimens is simultaneously stimulated during step a).

13. Device (10) for determining an unknown volume or weight of a sample (36a, 36b) by using dynamic thermal imaging, comprising:

   - a stimulation source (22) for periodically stimulating at least one specimen (30, 30a, 30b) for a predefined measurement time; and
   - a dynamic thermal imaging unit configured to record heat signals of the specimen (30, 30a, 30b),

   wherein the specimen (30, 30a, 30b) comprises a reference (34a, 34b) and the sample (36a, 36b), wherein at least one sample specific parameter of the sample (36a, 36b) is predetermined,
   wherein the device (10) further comprises a processing unit (14) configured to:

   - process heat signals for each specimen (30, 30a, 30b) of a plurality of specimens, wherein the volume of the reference (34a, 34b) in each specimen (30, 30a, 30b) is different and the sample is kept constant in each specimen; and
   - calculate the unknown volume or weight of the sample (36a, 36b) based on a stock concentration of the reference (34a, 34b), the volumes or weights of the reference (34a, 34b) in the plurality of specimens and the heat signals of the plurality of specimens.

14. Device (10) according to claim 13, wherein the device (10) further comprises a sample holder (32a, 32b), preferably comprising a plurality of compartments, wherein each compartment is configured to receive a specimen (30, 30a, 30b).

15. Device (10) according to claim 13 or 14, wherein the processing unit (14) is further configured to simultaneously process heat signals of each specimen (30, 30a, 30b) of the plurality of specimens.

16. Computer program, when run on a computer, configured to run the method according at least one of claims 1 to 12.

Fig. 1

Fig. 2a

Fig. 2b

| Equation | y = Intercept + B1*x^1 + B2*x^2 |
|---|---|
| Plot | Amplitude |
| Weight | Instrumental |
| Intercept | 0.01045 ± 8.11445E-5 |
| B1 | 9.52266E-6 ± 1.3585E-6 |
| B2 | 1.51106E-7 ± 3.36732E-9 |
| Residual Sum of Squares | 0.43706 |
| R-Square(COD) | 0.99999 |
| Adj. R-Square | 0.99998 |

Fig. 3

32b

30b

38b

34b

30b

36b

40

38a

## Fig. 4a

30b

32b

38b

36b

40

34b

38a

## Fig. 4b

Europäisches
Patentamt

European
Patent Office

Office européen
des brevets

**EUROPEAN SEARCH REPORT**

Application Number

EP 23 17 1414

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/225157 A1 (UNIV OSAKA PUBLIC CORP [JP]; MURATA MANUFACTURING CO [JP]) 11 November 2021 (2021-11-11) * figures 1,8,14 * | 1-16 | INV. G01N21/63 G01N25/20 |
| E | -& US 2023/194413 A1 (IIDA TAKUYA [JP] ET AL) 22 June 2023 (2023-06-22) * paragraphs [0057], [0110], [0114], [0117], [0120]; figures 1,8,14 * | 1-3,6, 8-16 | ADD. G01F22/00 G01N21/17 G01N25/72 G01N21/66 |
| X | GUO XINXIN ET AL: "Noninvasive glucose detection in human skin using wavelength modulated differential laser photothermal radiometry", BIOMEDICAL OPTICS EXPRESS, vol. 3, no. 11, 1 November 2012 (2012-11-01), page 3012, XP093077331, United States ISSN: 2156-7085, DOI: 10.1364/BOE.3.003012 Retrieved from the Internet: URL:https://opg.optica.org/directpdfaccess /8bdbe65b-68e3-44f8-9b3ff33e8a4e3651_24478 9/boe-3-11-3012.pdf?da=1&id=244789&seq=0&m obile=no> [retrieved on 2023-08-30] | 1-3,6,8, 9,11,13, 16 | |
| A | * The entire document, in particular sections 2,3 and 5 and figures 1,2,3, 6 and 9 * | 4,5,7, 10,12, 14,15 | |

-----

-/--

**TECHNICAL FIELDS SEARCHED (IPC)**

G01N
G01F

The present search report has been drawn up for all claims

| Place of search | Date of completion of the search | Examiner |
|---|---|---|
| The Hague | 30 August 2023 | Haenssler, Thedda |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MANDELIS ANDREAS ET AL: "Wavelength-modulated differential photothermal radiometry: Theory and experimental applications to glucose detection in water", PHYSICAL REVIEW E (STATISTICAL, NONLINEAR, AND SOFT MATTER PHYSICS), vol. 84, no. 4, 14 October 2011 (2011-10-14), XP093077330, US ISSN: 1539-3755, DOI: 10.1103/PhysRevE.84.041917 Retrieved from the Internet: URL:https://journals.aps.org/pre/pdf/10.1103/PhysRevE.84.041917> | 1-3,6,8, 9,11,13, 16 | |
| A | * The entire document, in particular sections I, II and V and figures 14, 17-20 * | 4,5,7, 10,12, 14,15 | |
| X | LEMAL PHILIPP ET AL: "Lock-in thermography as a rapid and reproducible thermal characterization method for magnetic nanoparticles", JOURNAL OF MAGNETISM AND MAGNETIC MATERIALS, ELSEVIER, AMSTERDAM, NL, vol. 427, 4 November 2016 (2016-11-04), pages 206-211, XP029887683, ISSN: 0304-8853, DOI: 10.1016/J.JMMM.2016.11.012 | 1-9, 11-16 | TECHNICAL FIELDS SEARCHED (IPC) |
| A | * The entire document in particular sections 2.6 and 3 and figures 1, 3 and 5 * | 10 | |

The present search report has been drawn up for all claims

| Place of search | Date of completion of the search | Examiner |
|---|---|---|
| The Hague | 30 August 2023 | Haenssler, Thedda |

## ANNEX TO THE EUROPEAN SEARCH REPORT
## ON EUROPEAN PATENT APPLICATION NO.

EP 23 17 1414

This annex lists the patent family members relating to the patent documents cited in the above-mentioned European search report.
The members are as contained in the European Patent Office EDP file on
The European Patent Office is in no way liable for these particulars which are merely given for the purpose of information.

30-08-2023

| Patent document cited in search report | | Publication date | Patent family member(s) | | Publication date |
|---|---|---|---|---|---|
| WO 2021225157 | A1 | 11-11-2021 | CN | 115485544 A | 16-12-2022 |
| | | | JP | WO2021225157 A1 | 11-11-2021 |
| | | | US | 2023194413 A1 | 22-06-2023 |
| | | | WO | 2021225157 A1 | 11-11-2021 |
| US 2023194413 | A1 | 22-06-2023 | CN | 115485544 A | 16-12-2022 |
| | | | JP | WO2021225157 A1 | 11-11-2021 |
| | | | US | 2023194413 A1 | 22-06-2023 |
| | | | WO | 2021225157 A1 | 11-11-2021 |

EPO FORM P0459

For more details about this annex : see Official Journal of the European Patent Office, No. 12/82

**REFERENCES CITED IN THE DESCRIPTION**

**Patent documents cited in the description**

• WO 2018219610 A1

**Non-patent literature cited in the description**

• Lock-in Thermography. Springer International Publishing, 2018

• *Particle & Particle Systems Characterization,* 2019, vol. 36 (9), 1900224